# EUROPEAN PATENT APPLICATION

(11) **EP 2 915 650 A1**
(43) Date of publication of application: **09.09.2015**
(21) Application number: 13851212.4
(22) Date of filing: 12.09.2013
(51) Int. Cl.: B29C 47/06, B29C 47/12, B29K 105/04, B29L 9/00

(54) **METHOD AND DEVICE FOR MANUFACTURING RESIN LAMINATE**

(30) Priority: 31.10.2012 JP 2012240999
(71) Applicant: Sekisui Chemical Co., Ltd., Osaka-shi, Osaka 530-8565 (JP)
(72) Inventor: TSUMURA, Kensuke, Mishima-gun Osaka 618-0021 (JP); HATADA, Ryouji, Mishima-gun Osaka 618-0021 (JP); WADA, Atsushi, Mishima-gun Osaka 618-0021 (JP); INUI, Nobuhiko, Mishima-gun Osaka 618-0021 (JP); TAKAHASHI, Katsunori, Mishima-gun Osaka 618-0021 (JP)
(74) Representative: Ter Meer Steinmeister & Partner
(86) International application number: PCT/JP2013/074693
(87) International publication number: WO 2014/069110

(57) **Abstract**

There is provided a method for efficiently and inexpensively providing a resin laminate having a foamed resin layer without using a bonding agent. The method for manufacturing a resin laminate includes the steps of: supplying a molten foamable resin composition 11 in a non-foamed state to a first manifold 4 of a multi-manifold mold 1; supplying a second resin composition 12 for forming a non-foamed resin layer to a second manifold 5; in the multi-manifold mold 1, extruding the foamable resin composition 11 from the first manifold 4 to a merging and laminating part 3 and releasing pressure to thereby cause foaming to form a foamed resin layer 11A; and, before solidification of the foamed resin layer 11, extruding a non-foamed resin layer 12A extruded from the second manifold 5 and laminating the non-foamed resin layer 12A to the foamed resin layer 11A.

## Description

### Technical Field

The present invention relates to a method for manufacturing a resin laminate including a foamed resin layer, particularly to a method and a device for manufacturing a resin laminate in which at least one foamed resin layer is laminated to a non-foamed resin layer.

### Background Art

A resin foam has been widely used to date for obtaining cushioning properties or achieving weight saving. An example of methods for manufacturing such a resin foam is disclosed in the following Patent Literature 1. In Patent Literature 1, a foamable resin composition containing a thermoplastic resin and a foaming agent is extruded from a mold and formed. Here, the foaming agent is decomposed by heating in a mold. Accordingly, foams generated by the decomposition of the foaming agent are formed.

Further, the following Patent Literature 2 similarly discloses a method of extrusion molding a foamable resin composition containing a thermoplastic resin composition and a foaming agent.

### Citation List

### Patent Literature

Patent Literature 1:
Japanese Patent Laid-Open No. 8-11190

Patent Literature 2:
Japanese Patent Laid-Open No. 2004-237729

### Summary of Invention

### Technical Problem

In both the manufacturing methods described in Patent Literatures 1 and 2, a resin foam has been obtained by extrusion molding. However, only a resin sheet constituted of a single foamed resin layer can be obtained by these methods.

Therefore, in order to increase mechanical strength or to improve surface properties, it is necessary to further laminate another resin layer to the surface of the resin foam obtained. However, when another resin layer is laminated to the surface of the resin foam obtained by extrusion molding, a bonding layer must be provided between them. Alternatively, it has been necessary to laminate another resin layer having a molten or softened surface to the resin foam. Accordingly, there has been the problem of complicating the process, resulting in the high cost.

An object of the present invention is to provide a method for manufacturing a resin laminate that allows efficient manufacturing of a foamed resin layer and also a resin laminate having a foamed resin layer and a non-foamed resin layer using one mold, and to provide a device for manufacturing a resin laminate that allows the method for manufacturing the resin laminate.

### Solution to Problem

The method for manufacturing a resin laminate according to the present invention is a method for manufacturing a resin laminate in which a foamed resin layer and a non-foamed resin layer are laminated and which has at least one foamed resin layer. The manufacturing method of the present invention includes the steps of: supplying a foamable resin composition to a first manifold and supplying a second resin composition for constituting a non-foamed resin layer to a second manifold in a multi-manifold mold, the multi-manifold mold comprising the first manifold for supplying a molten foamable resin composition in a non-foamed state, the second manifold for forming the non-foamed resin layer, and a merging and laminating part connected to the downstream of a manifold part having the first and the second manifold; extruding in the multi-manifold mold, the foamable resin composition from the first manifold to the merging and laminating part in the mold and releasing pressure to thereby foam the foamable resin composition to form the foamed resin layer; extruding the non-foamed resin layer from the second manifold and, in an internal space of the merging and laminating part in the multi-manifold mold, merging and laminating the extruded non-foamed resin layer and the foamed resin layer simultaneously with, during, or after the foaming of the foamable resin by the pressure release.

In a specific aspect of the method for manufacturing a resin laminate according to the present invention, the foamed resin layer after foaming is cooled so that the foamed resin layer maintains a foamed state before reaching the merging and laminating part.

In another specific aspect of the method for manufacturing a resin laminate according to the present invention, the foamed resin layer is cooled, during the cooling, to a temperature lower than the melting point of a resin constituting the foamed resin layer.

In still another specific aspect of the method for manufacturing a resin laminate according to the present invention, a plurality of the second manifolds are used to laminate a plurality of non-foamed resin layers to the foamed resin layer.

In still another specific aspect of the method for manufacturing a resin laminate according to the present invention, the non-foamed resin layers are laminated to both surfaces of the foamed resin layer.

The method for manufacturing a resin laminate according to the present invention preferably further includes a step of supplying the resin laminate obtained by merging and laminating the non-foamed resin layer and the foamed resin layer to a sizing die to thereby smooth the surface of the resin laminate and efficiently cool the resin laminate.

In the method for manufacturing a resin laminate according to present invention, the foamable resin composition is preferably a resin composition containing a thermoplastic resin and a foam nucleating agent, wherein the foam nucleating agent is contained in an amount of 0.1 to 10 parts by weight based on 100 parts by weight of the thermoplastic resin.

In the method for manufacturing a resin laminate according to the present invention, the foamable resin composition is a resin composition containing a thermoplastic resin and a crosslinking component, wherein the crosslinking component is contained in an amount of 0.5 to 40 parts by weight based on 100 parts by weight of the thermoplastic resin.

The device for manufacturing a resin laminate according to the present invention includes a multi-manifold part arranged on the upstream side and a merging and laminating part arranged on the downstream side of the multi-manifold part. Preferably, the device for manufacturing a resin laminate according to the present invention further includes a sizing die for shaping the surface of the resin laminate which is connectedly arranged on the downstream side of the merging and laminating part.

The multi-manifold part has a first manifold for supplying a foamable resin composition and a second manifold for supplying a second resin composition for constituting a non-foamed resin layer.

The merging and laminating part is connected to the downstream side of the multi-manifold part in the multi-manifold mold. In the merging and laminating part, there is provided an internal space in which the first manifold and the second manifold merge and in which a foamed resin layer is laminated to the non-foamed resin layer.

In another specific aspect of the device for manufacturing a resin laminate according to the present invention, the dimension of the internal space of the merging and laminating part along the thickness direction of the resin laminate is larger than the dimension of the resin laminate along the thickness direction at the end of the first manifold on the side toward the merging and laminating part.

In still another specific aspect of the device for manufacturing a resin laminate according to the present invention, the device has a portion in which the dimension of the internal space of the merging and laminating part along the thickness direction of the laminate is gradually enlarged from the end of the merging and laminating part on the side connected to the first manifold toward the downstream side.

In still another specific aspect of the device for manufacturing a resin laminate according to the present invention, a passage wall in the portion in which the dimension of the internal space of the merging and laminating part along the thickness direction is gradually enlarged from the end of the merging and laminating part on the side connected to the first manifold toward the downstream side is surface-treated to increase the linear velocity of the foamable resin in contact with the passage wall.

In still another specific aspect of the device for manufacturing a resin laminate according to the present invention, a cooling device to maintain a foamed state of the foamed resin layer is provided in the laminating part.

### Advantageous Effects of Invention

According to the method and device for manufacturing a resin laminate according to the present invention, in a multi-manifold mold, a foamed resin layer is formed, while a non-foamed resin layer is extruded from the second manifold, and merged with the foamed resin layer in the internal space to laminate thereto. Therefore,
the method and device allow considerable simplification of manufacturing process of a resin laminate in which a foamed resin layer and a non-foamed resin layer are laminated, and reduction in manufacturing cost of the resin laminate.

### Brief Description of Drawings

[Figure 1] Figure 1 (a) is a schematic front sectional view of a device for manufacturing a resin laminate according to a first embodiment of the present invention; and Figure 1 (b) is a schematic sectional view showing an enlarged main part of the device.
[Figure 2] Figure 2 is a schematic sectional view showing an enlarged main part of a modification of a device for manufacturing a resin laminate according to a first embodiment of the present invention.
[Figure 3] Figure 3 is a schematic sectional view showing an enlarged main part of another modification of a device for manufacturing a resin laminate according to a first embodiment of the present invention.
[Figure 4] Figure 4 is a schematic sectional view showing an enlarged merging and laminating part in a device for manufacturing a resin laminate according to a first embodiment of the present invention.
[Figure 5] Figure 5 is a sectional view showing a resin laminate obtained in a method for manufacturing of a resin laminate according to a first embodiment of the present invention.
[Figure 6] Figure 6 is a front sectional view for describing a second embodiment of a device for manufacturing a resin laminate.
[Figure 7] Figure 7 is a front sectional view for describing a third embodiment of a device for manufacturing a resin laminate.
[Figure 8] Figure 8 (a) is a plan view of a coat hanger type manifold for constituting a non-foamed resin layer used in a first embodiment of the present invention;
Figure 8 (b) is a sectional view taken along the line A-A in Figure 8 (a); and Figure 8 (c) is a sectional view taken along the line B-B.
[Figure 9] Figure 9 (a) is a plan view of a straight manifold type for constituting a foamed resin layer used in a device for manufacturing a resin laminate according to a first embodiment of the present invention; and
Figure 9 (b) is a sectional view taken along the line C-C in Figure 9 (a).
[Figure 10] Figure 10 is a schematic sectional view of a portion where a manifold shown in Figure 8 merges with a manifold shown in Figure 9 in a first embodiment of the present invention.
[Figure 11] Figure 11 (a) is a plan view of a coat hanger type manifold for constituting a non-foamed resin layer used in a first embodiment of the present invention;
Figure 11 (b) is a sectional view taken along the line D-D in Figure 11 (a); and Figure 11 (c) is a sectional view taken along the line E-E.
[Figure 12] Figure 12 (a) is a plan view of a straight manifold type for constituting a foamed resin layer used in a device for manufacturing a resin laminate according to a first embodiment of the present invention; and
Figure 12 (b) is a sectional view taken along the line F-F in Figure 12 (a).
[Figure 13] Figure 13 is a schematic sectional view of a portion where a manifold shown in Figure 11 merges with a manifold shown in Figure 12 in a first embodiment of the present invention.
[Figure 14] Figure 14 (a) is a plan view of a straight manifold type for constituting a non-foamed resin layer used in still another embodiment of the present invention; Figure 14 (b) is a sectional view taken along the line G-G in Figure 14 (a); and Figure 14 (c) is a sectional view taken along the line H-H in Figure 14 (a).
[Figure 15] Figure 15 is a schematic front sectional view in the case of providing a sizing die in a device for manufacturing a resin laminate according to a first embodiment of the present invention.
[Figure 16] Figure 16 shows a SEM photograph of a foamed resin layer when using a foamable resin composition in which talc which is a foam nucleating agent is added in an amount of 0.5% by weight based on 100 parts by weight of a thermoplastic resin.
[Figure 17] Figure 17 shows a SEM photograph of a foamed resin layer when using a foamable resin composition in which calcium carbonate which is a foam nucleating agent is added in an amount of 0.5% by weight based on 100 parts by weight of a thermoplastic resin.
[Figure 18] Figure 18 shows a SEM photograph of a foamed resin layer when using a foamable resin composition in which sodium bicarbonate which is a foam nucleating agent is added in an amount of 0.5% by weight based on 100 parts by weight of a thermoplastic resin.
[Figure 19] Figure 19 shows a SEM photograph of a foamed resin layer when using a foamable resin composition in which a foam nucleating agent is not used.
[Figure 20] Figure 20 shows a relationship between the strain and the viscosity of a foamable resin composition when a crosslinking component is added in an amount of 20 parts by weight based on 100 parts by weight of a thermoplastic resin.
[Figure 21] Figure 21 is a schematic sectional view of a device for manufacturing a resin laminate used in Example.

### Description of Embodiments

Hereinafter, the present invention will be clarified by describing specific embodiments of the present invention.

In the method for manufacturing a resin laminate according to the present invention, there is manufactured a resin laminate in which a foamed resin layer and a non-foamed resin layer are laminated and which has at least one foamed resin layer.

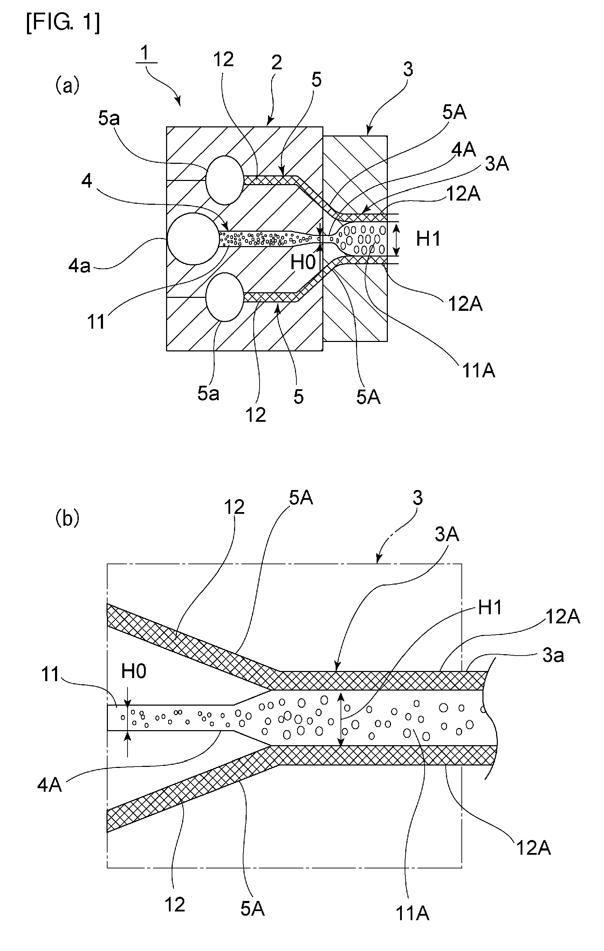

In the manufacturing method according to a first embodiment of the present invention, a multi-manifold mold 1 shown in Figure 1 (a) is used. Further, Figure 1 (b) is a schematic sectional view showing an enlarged main part of the multi-manifold mold 1. Note that, as will be described below, not only the multi-manifold mold 1 shown in Figure 1 but also a suitable multi-manifold mold that can develop a function to be described below can be used in the manufacturing method of the present invention.

The multi-manifold mold 1 has a multi-manifold part 2 and a merging and laminating part 3 provided on the downstream side of the multi-manifold part 2.

In the present embodiment, the multi-manifold part 2 has a first manifold 4 and second manifolds 5 and 5. However, the first manifold 4 may be provided in a plurality of numbers. The number of the second manifold 5 is also not particularly limited, but the number may be one or may be three or more. That is, the number of the first manifold 4 and the number of the second manifold 5 may be suitably selected depending on the number of the foamed resin layer and the number of the non-foamed resin layer in the resin laminate obtained.

The first manifold 4 is provided for supplying a molten foamable resin composition in a non-foamed state. An entrance side end 4a of the first manifold 4 is connected to a resin composition supply port which is not shown. The first manifold 4 is constituted so as to extend from the end 4a toward the downstream side. Note that the downstream side means the direction to right on the drawing, which is the direction from the multi-manifold part 2 toward the merging and laminating part 3 side. The flow direction of the resin in the first manifold 4 is the longitudinal direction of a sheet finally obtained, and the direction shown by the arrow shown in Figure 1 is the thickness direction of the sheet. Therefore, the dimension in the thickness direction in the first manifold 4 in Figure 1 (a) may be selected depending on the thickness of the foamed resin layer before foaming and by extension after foaming.

The second manifolds 5 and 5 are each provided for supplying a second resin composition for constituting a non-foamed resin layer as a surface layer. The end 5a of the second manifold 5 is connected to a resin composition supply port which is not shown. A molten second resin composition is supplied from the resin composition supply port toward the end 5a and will flow toward the downstream side of the second manifold 5.

The cross section of the second manifold 5 orthogonal to the flow direction also has a dimension depending on the cross section of a sheet made of the non-foamed resin layer. On that point, the dimension depending on the cross section of the non-foamed resin layer is not necessarily the same as the dimension after completion of the non-foamed resin layer, but is selected depending on the volume before curing of the non-foamed resin. That is, the cross-sectional shape of the second manifold 5 is selected in consideration of cure shrinkage and the like.

The multi-manifold part 2 can be constituted by a suitable member having the first manifold 4 and the second manifold 5 as described above. Examples of the shape of respective manifolds which constitute the first manifold 4 and the second manifold 5 will be described below.

The first manifold 4 and the second manifolds 5 and 5 lead to the merging and laminating part 3, respectively. The portions of the first manifold 4 and the second manifolds 5 and 5 leading to the merging and laminating part 3 are called resin passages 4A, 5A, and 5A, respectively. In the merging and laminating part 3, the resin passage 4A merges with the resin passage 5A in an internal space 3A. Hereinafter, the thickness direction of the resin laminate is defined as the thickness direction. The dimension HI of the internal space 3A in the thickness direction is considerably larger than the dimension H0 of the first manifold in the thickness direction at the end on the side connected to the internal space 3A. This is for allowing quick foaming of the foamable resin to naturally form the foamed resin layer at the merging part. In particular, in the present embodiment, there is provided, on the upstream side of the internal space 3A, a portion in which the dimension of the internal space 3A in the thickness direction is gradually enlarged from the end of the internal space 3A on the side of the resin passage 4A toward the downstream side in the internal space 3A. Therefore, the foaming of the foamable resin composition may be performed more smoothly and naturally. However, the portion in which the dimension in the thickness direction is gradually enlarged may not necessarily be provided.

Further, when a portion is provided in which the dimension of the internal space 3A in the thickness direction is gradually enlarged from the end of the internal space 3A on the side of the resin passage 4A toward the downstream side in the internal space 3A, a passage wall in the portion may be surface-treated. A method of the surface treatment preferably includes surface treatment with a fluororesin, but is not particularly limited thereto. Surface treatment with polytetrafluoroethylene is more preferred.

By applying the surface treatment, the linear velocity of the foamable resin in contact with the passage wall can be increased and brought close to the linear velocity of the foamable resin which is not in contact with the passage wall. Thereby, the foam rupture caused by the difference between the linear velocity of the foamable resin in contact with the passage wall and the linear velocity of the foamable resin which is not in contact with the passage wall can be prevented.

On the other hand, the resin passage 5A has a thickness equivalent to the dimension of the second manifold 5 in the sheet thickness direction and is merged with the resin passage 4A.

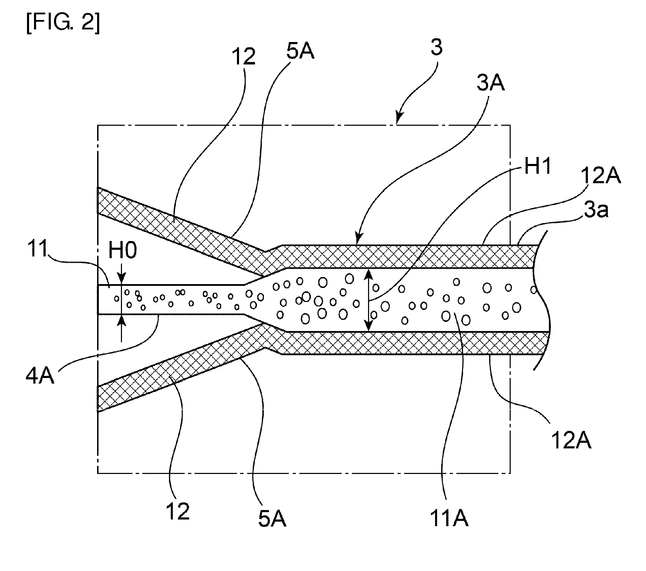

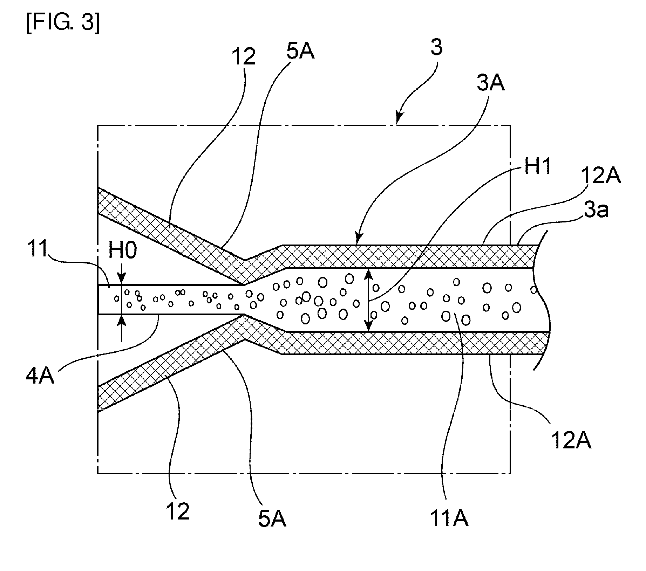

Note that the resin passage 5A may merge with the resin passage 4A after the foamable resin is foamed, but the resin passage 5A may merge with the resin passage 4A during the foaming of the foamable resin, as shown in Figure 2. Alternatively, the resin passage 5A may merge with the resin route 4A simultaneously with the foaming of the foamable resin, as shown in Figure 3.

A resin laminate finally laminated is extruded from an extrusion opening 3a of the merging and laminating part 3.

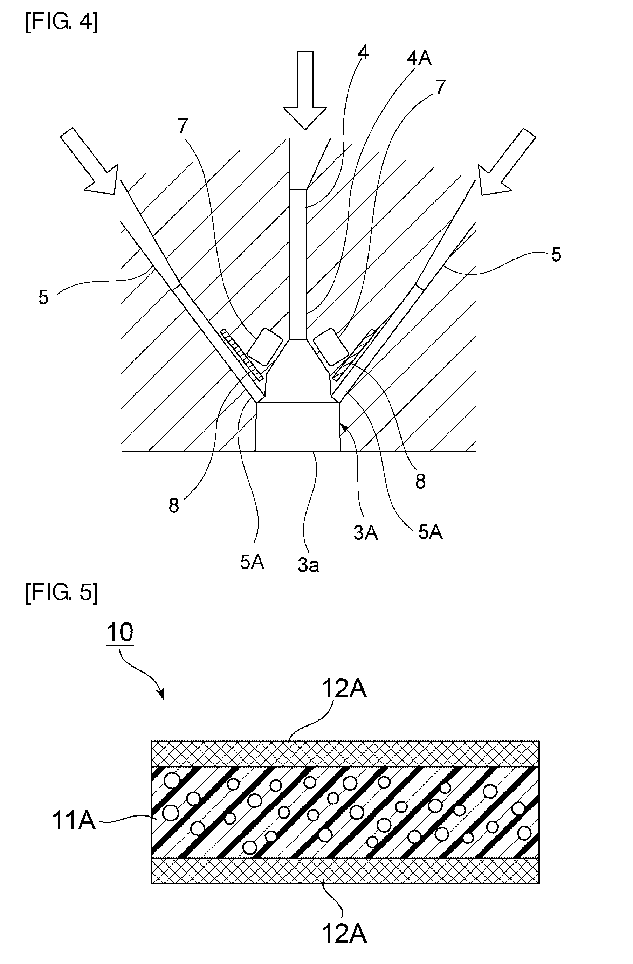

Note that, as shown in Figure 4, temperature control pipings 7 and 7 are arranged before the internal space 3A of the merging and laminating part 3. A temperature control fluid is passed in the temperature control pipings 7 and 7. Liquids such as water or gases such as air can be used as the temperature control fluid. In the present embodiment, a fluid having a lower temperature than the temperature of the molten foamable resin composition is passed in the temperature control piping 7. Thereby, the molten foamable resin layer in a non-foamed state can be cooled to some extent and solidified while maintaining a foamed state.

Note that the temperature control piping 7 is connected to a fluid supply unit which is not shown.

Further, an insulating member 8 is arranged between the temperature control piping 7 and the resin passage 5A. The insulating members 8 and 8 are provided in order not to cool the molten second resin composition. That is, the insulating members 8 and 8 are provided in order to intercept the cooling action by the temperature control piping 7. Therefore, the insulating members 8 and 8 are arranged between the temperature control piping 7 and the resin passage 5A at a position before the merging part where the temperature control piping 7 is provided.

The insulating members 8 and 8 preferably have a flat shape, such as an insulating board. However, the insulating members 8 and 8 may have a cylindrical shape surrounding the resin passage 5A. The insulating members 8 and 8 are not particularly limited as long as the insulation function thereof is better than that of a metallic material constituting the multi-manifold mold 1. Therefore, the insulating member 8 can be constituted using heat-resistant materials, such as a polyamide resin, an epoxy resin, and a phenol resin.

The manufacturing method of the present embodiment using the multi-manifold mold 1 will be more specifically described.

First, the molten foamable resin composition 11 which is not foamed is supplied to the first manifold 4. On the other hand, the second resin composition 12 for constituting the molten non-foamed resin layer is supplied to the second manifold 5.

The foamable resin composition and the second resin composition are previously heated and are in a molten state. Then, the foamable resin composition 11 is supplied from the end 4a of the first manifold 4 described above. The second resin composition 12 is supplied from the end 5a of the second manifold 5 to the second manifold 5.

The molten foamable resin composition 11 in a non-foamed state proceeds through the first manifold 4 in the flow direction as described above. Similarly, the second resin composition 12 proceeds through the second manifolds 5 and 5 in the resin flow direction as described above.

Then, the foamable resin composition 11 proceeds from the multi-manifold part 2 to the merging and laminating part 3 side and reaches the resin passage 4A in the merging and laminating part 3. In this state, the foamable resin composition is subjected to pressure release to thereby foam the composition. Thus, the foamed resin layer 11A will be formed.

On the other hand, the molten second resin composition 12 which has been proceeding through the second manifold 5 reaches the resin passage 5A and laminated to the foamed resin layer 11A as described above.

In one multi-manifold mold 1, that is, in the merging and laminating part 3, the foamed resin layer 11A and the non-foamed resin layers 12A and 12A will be laminated. Therefore, the non-foamed resin layer 12A will be laminated before the surface of the foamed resin layer 11A hardens by cooling. Therefore, a resin laminate can be efficiently obtained without providing a bonding material, such as an adhesive, and the like and without performing a bonding process. Thus, a resin laminate 10 shown in Figure 5 is obtained. In the resin laminate 10, the non-foamed resin layers 12A and 12A are laminated to both surfaces of the foamed resin layer 11A.

Therefore, according to the manufacturing method of the present embodiment, the resin laminate 10 in which the non-foamed resin layers 12A and 12A are laminated to both surfaces of the foamed resin layer 11A can be efficiently obtained. In the above resin laminate 10, weight saving can be attained by the foamed resin layer 11A. Further, stress relaxation can be developed. On the other hand, mechanical strength can be increased and surface smoothness can be improved by the non-foamed resin layers 12A and 12A. Therefore, a resin laminate having the advantages of a foamed resin layer and a non-foamed resin layer can be provided inexpensively and efficiently.

In advance of the merging and laminating part, the foamable resin composition is pressure-released by the increase in the dimension of the resin passage 4A in the thickness direction and starts to foam, as shown in Figure 1 (b). Therefore, the foamed resin layer is formed. Then, the foamed resin layer 11A formed starts to be solidified by the cooling action of the temperature control piping 7. Thereby, the foamed state is stably maintained. Then, the non-foamed resin layer 12A is laminated to the foamed resin layer 11A before the surface thereof is completely cooled and solidified.

Note that the surface of the foamed resin layer is preferably not completely solidified at the point of merging. Thereby, the foamed resin layer and the non-foamed resin layer can be strongly bonded without using an adhesive. Further, it is desirable that the foam state be kept stable at the merging point. Therefore, the temperature control in the resin passage 4A is desirably such that the resin passage 4A is slightly cooled so that the foam state is maintained in advance of merging, and the foamed resin layer is maintained at a temperature where the surface is not solidified.

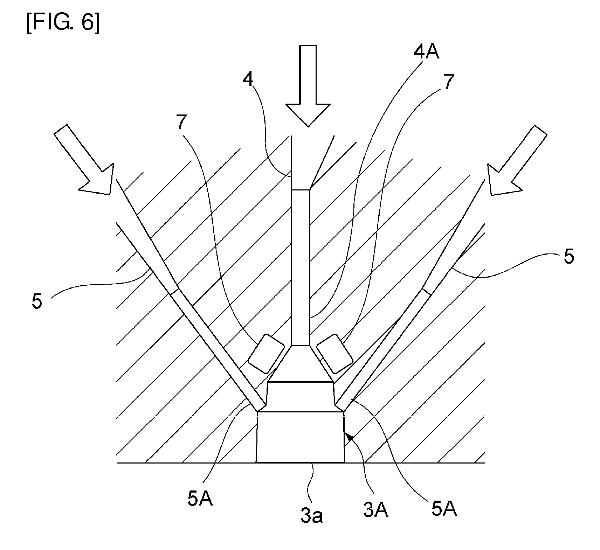

Although the temperature control piping 7 and the insulating member 8 are provided in the first embodiment, only the temperature control piping 7 may be arranged as in the second embodiment shown in Figure 6. That is, the insulating member 8 may not necessarily be provided.

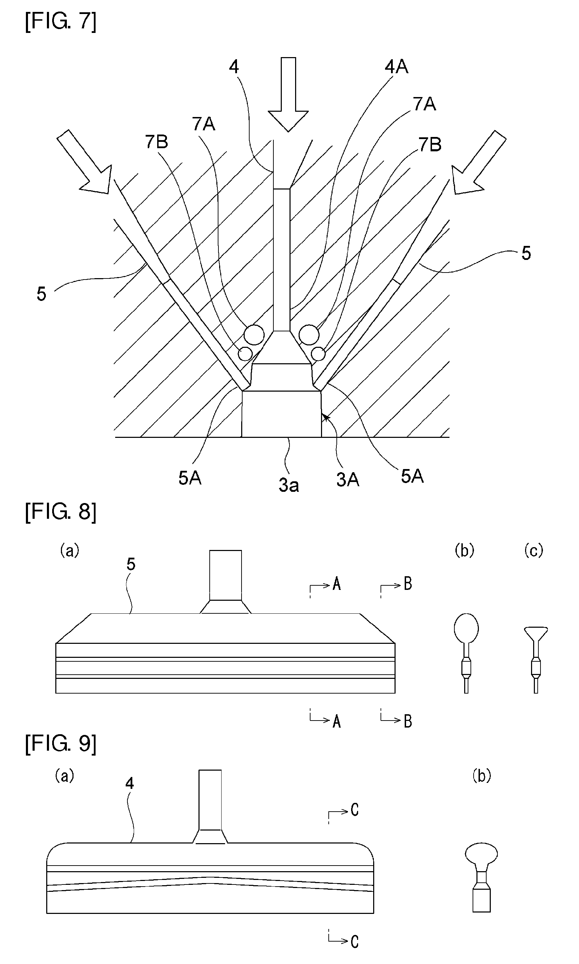

Further, as in the third embodiment shown in Figure 7, a plurality of temperature control pipings 7A and 7B may be arranged around the resin passage 4A in the vicinity of the merging part. Further, temperature control piping with a circular cross section like the temperature control piping 7A may be used, and the shape of the temperature control piping is not particularly limited.

Next, examples of the shape of manifolds which constitute the first manifold 4 and the second manifold 5 will be described.

Figure 8 (a) is a plan view showing a coat hanger type manifold for constituting a second manifold 5 in the first embodiment. Figures 8 (b) and (c) are sectional views taken along the line A-A and the line B-B in Figure 8 (a), respectively.

On the other hand, Figure 9 (a) is a plan view showing a straight manifold type for constituting a first manifold 4 in the first embodiment. Figure 9 (b) is a sectional view taken along the line C-C in Figure 9 (a).

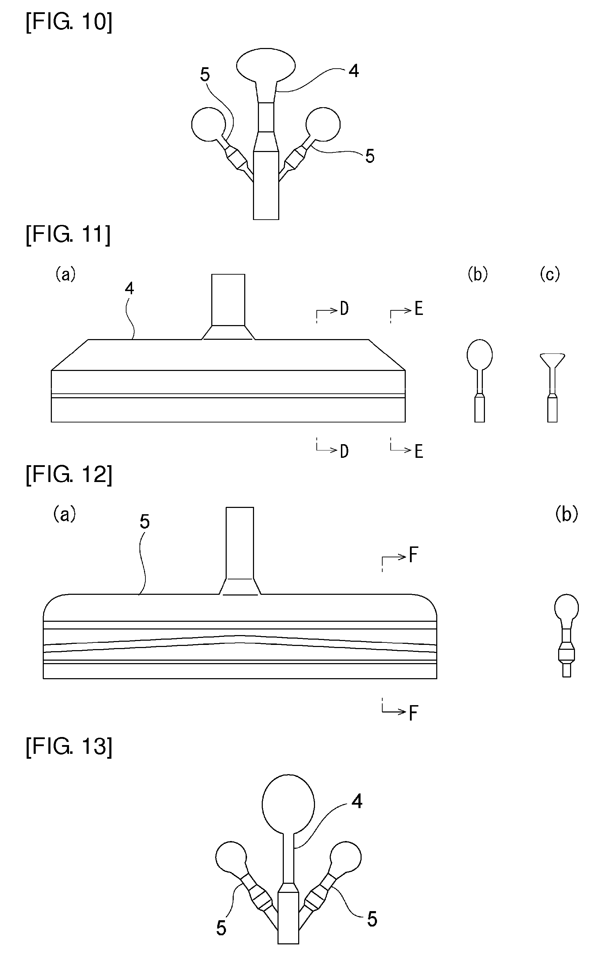

That is, in the first embodiment, the first manifold 4 is the straight manifold type shown in Figure 9 (a), and the second manifolds 5 and 5 are constituted by the coat hanger type manifold shown in Figure 8 (a). Then, as shown by a schematic sectional view in Figure 10, these manifolds are combined so that the second manifolds 5 and 5 of the coat hanger type may merge with the first manifold 4 of the straight manifold type in the downstream side.

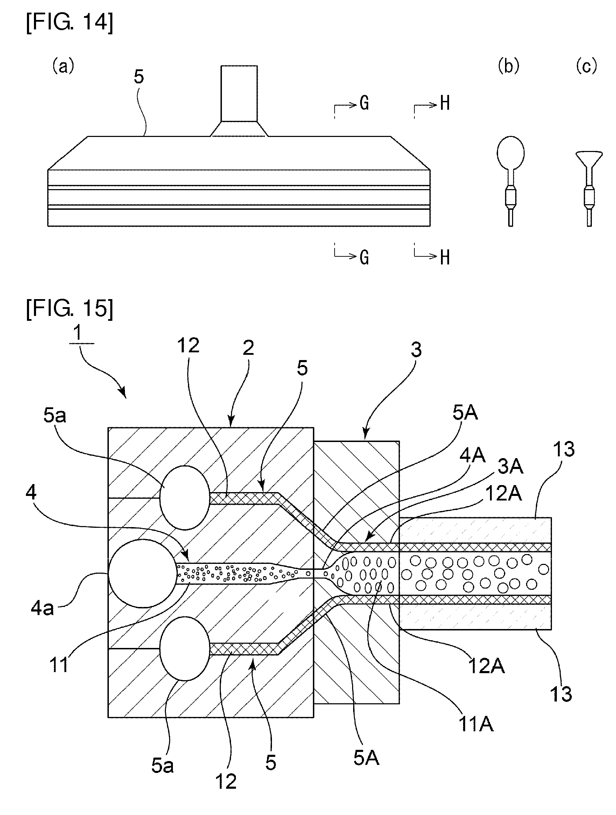

However, the combination is not limited to the above combination, but the second manifold 5 of the straight manifold type shown in Figures 12 (a) and (b) may be combined with the first manifold 4 of the coat hanger type shown in Figures 11 (a) to (c). That is, as shown in Figure 13, the device may be constituted such that the second manifolds 5 and 5 of the straight manifold type is merged with the first manifold 4 of the coat hanger type. Note that the second manifold 5 of the straight manifold type shown in Figure 14 (a) to (c) may be used instead of the second manifold 5 of the straight manifold type shown in Figures 12 (a). However, when the second manifold 5 of the straight manifold type shown in Figure 12 (a) is used, the length in the resin flow direction of a portion having a large thickness in the central portion is longer than the length at both ends in a plane view of the manifold. Thus, the variation in the resin feed rate in the width direction of a resin sheet can be reduced. Consequently, it is desirable to use the straight manifold type shown in Figure 12 (a).

Note that the members constituting the manifolds in the multi-manifold mold 1 in the present invention are not limited to the manifolds shown in Figure 8 to Figure 14, but various manifolds can be used for the members.

Further, in the present invention, it is preferred to provide sizing dies 13 and 13 to shape the surface of the resin laminate 10 such that the sizing dies are connected to the downstream side of the merging and laminating part 3 of the multi-manifold mold 1, as shown in Figure 15. The sizing dies 13 and 13 are molds in each of which water is circulated. The temperature of the water is preferably equal to the crystallization temperature of a resin or less, more preferably 50°C or less, but is not particularly limited thereto. The temperature is further preferably 20°C. Thus, the sizing dies 13 and 13 can also cool the resin laminate 10. This allows suppression of foam rupture of a foamed layer. Note that the surface is preferably shaped by the sizing dies 13 and 13 according to the following reasons.

When the sizing dies 13 and 13 are not provided, the foam in the foamed resin layer 11A will further grow even after the resin laminate 10 has passed the merging and laminating part 3 of the multi-manifold mold 1. Then, the stress generated with the growth of the foam is transferred to the non-foamed resin layers 12A and 12A and may deteriorate the surface properties of the resin laminate 10. In order to improve the deterioration of the surface properties, the surface is preferably shaped by the sizing dies 13 and 13.

Further, the resin laminate 10 having a three-layer structure shown in Figure 5 has been obtained in the above embodiments. Thus, non-foamed resin layers 12A and 12A have been laminated to both surfaces of one foamed resin layer 11A. However, two or more foamed resin layers may be formed in the present invention. Further, as described above, only one non-foamed resin layer may be formed, or three or more non-foamed resin layers may be formed. Therefore, for example, a laminate in which the non-foamed resin layer 12A is laminated to only one side of the foamed resin layer 11A may be formed.

Next, materials used in the method for manufacturing a resin laminate of the present invention will be described.

### (Foamable Resin Composition)

In the present invention, a molten foamable resin composition in a non-foamed state is supplied to the first manifold. A foamable resin composition containing a thermoplastic resin and a foaming agent can be used as the foamable resin composition.

Examples of the thermoplastic resin include, but are not particularly limited to, polyolefin such as polyethylene and polypropylene, polystyrene, and polyurethane. Among them, a polypropylene resin is suitably used because it is widely used in various resin molded articles and is inexpensive.

A suitable foaming agent that achieves foaming when a passage is enlarged as it reaches the merging and laminating part from the first manifold can be used as the foaming agent. Examples of such a foaming agent include a chemical foaming agent and a physical foaming agent. A chemical foaming agent is preferred in terms of further increasing foaming efficiency. A physical foaming agent is preferred in terms of an environmental load and a cost that allows inexpensive manufacturing. The foaming agent may be used alone or in combination.

An inorganic chemical foaming agent and an organic chemical foaming agent can be used as the chemical foaming agent. Examples of the inorganic chemical foaming agent include sodium hydrogencarbonate and ammonium carbonate. Examples of the organic chemical foaming agent include a nitroso compound, an azo compound, and a sulfonylhydrazide compound. Examples of the azo compound include azodicarbonamide. Sodium hydrogencarbonate is preferred in terms of further increasing foaming efficiency.

The physical foaming agent is injected into a molten resin from a cylinder or a screw of a molding machine as a gas or supercritical fluid, and the physical foaming agent is then dispersed and dissolved in the resin. Then, the foamable resin composition is allowed to flow into the mold and then pressure-released, thereby capable of foaming the composition. Specific examples of the physical foaming agent include aliphatic hydrocarbons, alicyclic hydrocarbons, and inorganic gases. Examples of the aliphatic hydrocarbons include butane. Examples of the alicyclic hydrocarbons include cyclobutane. Examples of the inorganic gases include nitrogen, carbon dioxide, and air.

However, in the present invention, not only the physical foaming agents such as nitrogen and carbon dioxide, but other foaming agents, azo compounds, and the like may be used.

The content of the foaming agent may be suitably selected depending on the physical properties of the foamed resin layer in which the foaming agent is to be dissolved. Generally, a foaming agent may be contained in an amount of about 3 to 10 parts by weight based on 100 parts by weight of a thermoplastic resin. In the case of physical foaming agents such as carbon dioxide, a resin may be filled with a gas in an amount corresponding to a target expansion ratio.

In the present invention, a foam nucleating agent may be further added. When the foam nucleating agent is used, the foam diameter can be further controlled and stabilized. Examples of the foam nucleating agent that can be used include, but are not particularly limited to, talc, calcium carbonate, and sodium bicarbonate. The content of the foam nucleating agent is also not particularly limited, but the foam nucleating agent is preferably contained in an amount of 0.1 to 10 parts by weight based on 100 parts by weight of the thermoplastic resin. The content is more preferably 0.1 to 5 parts by weight.

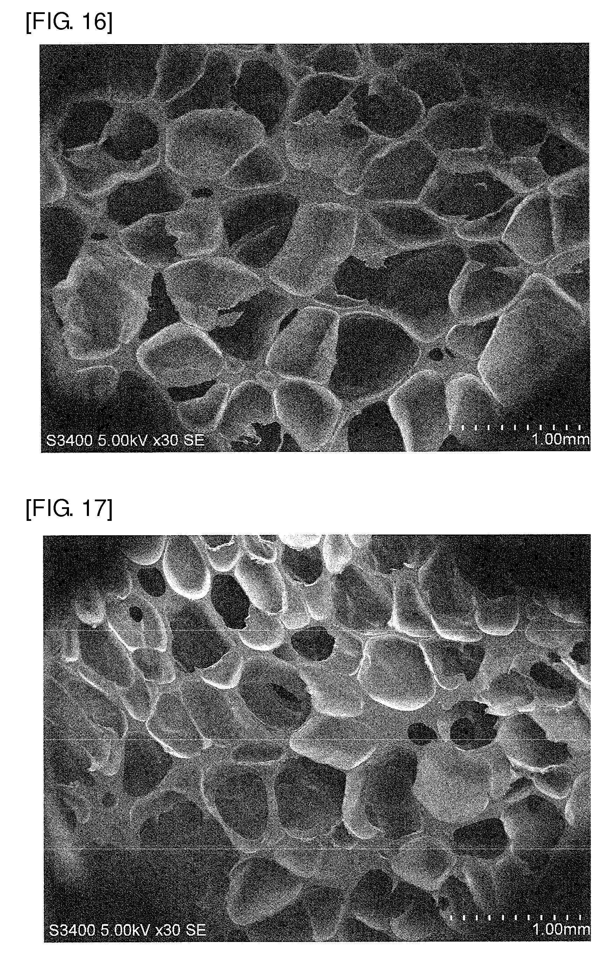

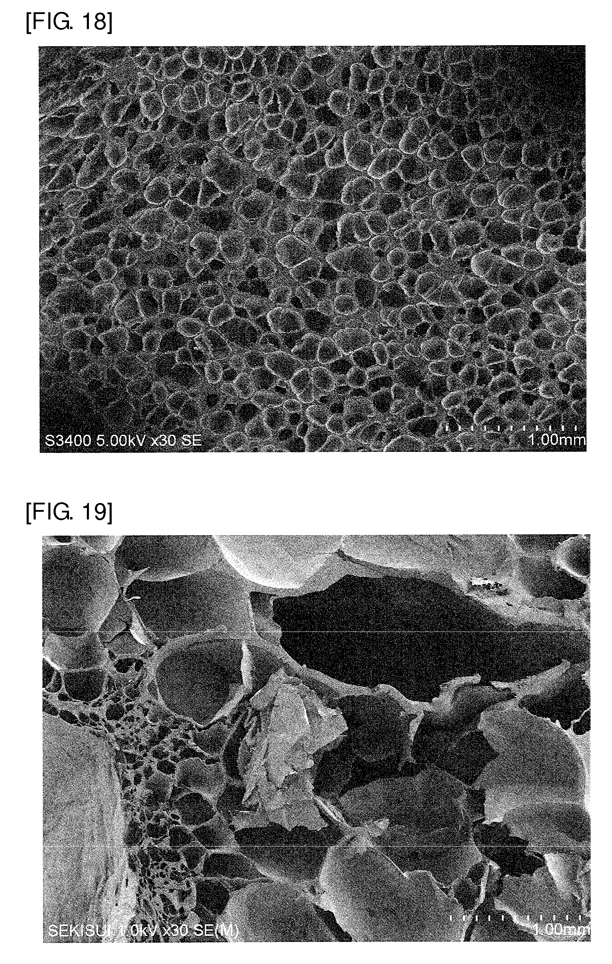

Figure 16 to Figure 18 are each a SEM photograph of a foamed resin layer at a magnification of 5 times in the case of using a foamable resin composition in which talc, calcium carbonate, or sodium bicarbonate, which is a foam nucleating agent, is added in an amount of 0.5% by weight based on 100 parts by weight of the thermoplastic resin, respectively. For comparison, Figure 19 shows a SEM photograph of a foamed resin layer at a magnification of 3 times in the case of using a foamable resin composition in which a foam nucleating agent is not used.

Figure 16 to Figure 19 reveal that when a foam nucleating agent is used, the foam diameter is controlled. Note that the foam diameter in the case of using calcium carbonate or talc was 500 µm, and the foam diameter in the case of adding sodium bicarbonate was 300 µm. On the other hand, when a foam nucleating agent was not used, the foam diameter varied in the range of 700 to 1000 µm.

Further, in the present invention, a crosslinking component may be further added. When the crosslinking agent is added, the foam rupture of the generated foam can be prevented, and the expansion ratio can be further improved. Then, in this case, the weight of the resin laminate can be further reduced, and the rigidity of the resin laminate can be further improved. The crosslinking component that can be used include, but is not particularly limited to, Linklon polypropylene and electron beam-crosslinked polypropylene. Further, the content of the crosslinking component is also not particularly limited, but the crosslinking component is preferably contained in an amount of 0.5 to 40 parts by weight based on 100 parts by weight of the thermoplastic resin. The content is more preferably 0.5 to 20 parts by weight.

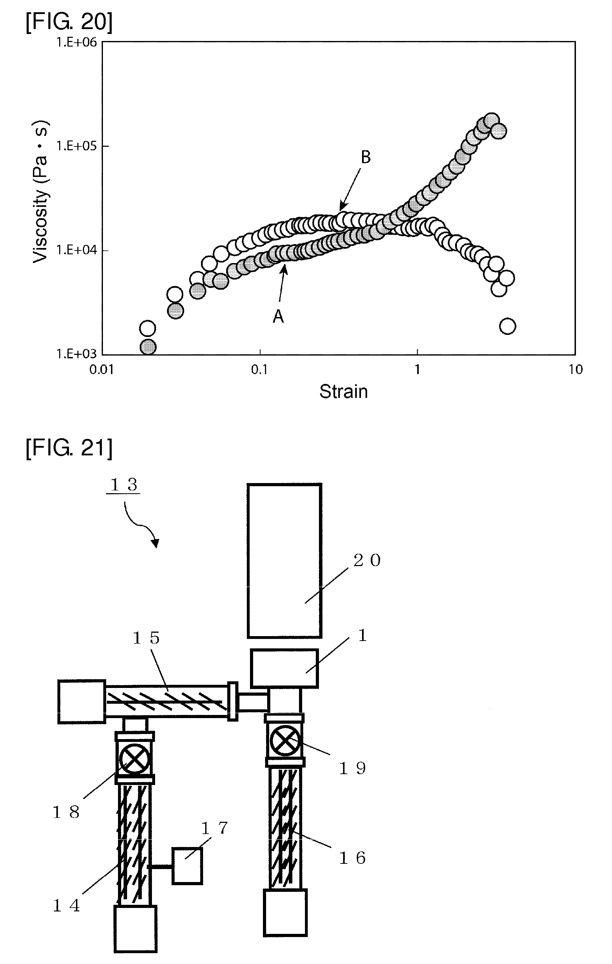

Figure 20 shows a relationship between the strain and the viscosity of a foamable resin composition when a crosslinking component is added in an amount of 20 parts by weight based on 100 parts by weight of a thermoplastic resin. In Figure 20, the curve indicated by the arrow A shows the result when a crosslinking component is added, and the curve indicated by the arrow B shows the result when a crosslinking component is not added. Figure 20 reveals that, in the curve indicated by the arrow A in which a crosslinking component is added, the viscosity rapidly increases at a strain of 1.0 or more, and strain hardening has proceeded by the crosslinking. That is, at the time of foaming, the foam can be prevented from foam rupture caused by cell breakage.

For supplying a molten foamable resin composition in a non-foamed state to the first manifold, the foamable resin composition may be heated to a temperature that melts the foamable resin composition. That is, the composition may be heated to a temperature equal to the melting point of the thermoplastic resin or more. Note that the melting point of the thermoplastic resin means the temperature of the melting peak determined by DSC.

### (Second Resin Composition)

A second resin composition is a composition for constituting a non-foamed resin layer. A resin composition containing a thermoplastic resin and a suitable additive can be used as the second resin composition.

Examples of the thermoplastic resin used for the second resin composition include polyolefin, such as polyethylene and polypropylene, and ABS resin. Among them, it is desirable to use a thermoplastic resin having a higher mechanical strength than the thermoplastic resin constituting the foamed resin layer in order to effectively increase the mechanical strength of a resin laminate.

In the second resin composition, the external strength may be adjusted by adding a suitable filler such as an inorganic filler to the thermoplastic resin. Further, an ultraviolet absorber, EPDM for imparting flexibility, an antioxidant, and the like may be added as other additives.

Next, a specific example of the present invention will be described. Note that the present invention is not limited to the following example.

### (Example)

A resin laminate 10 according to the present invention can be manufactured by using a resin laminate manufacturing device 14 shown in Figure 21. The resin laminate can be manufactured by supplying a foamable resin composition in a non-foamed state and a second resin composition which is a non-foamed resin composition from each manifold to a multi-manifold mold 1 and extruding these compositions.

One hundred parts by weight of polypropylene (trade name: Novatec EG8B, manufactured by Japan Polypropylene Corporation) and 15 parts by weight of polyethylene (trade name: Novatec LE502H, manufactured by Japan Polyethylene Corporation) are melt-kneaded at 190°C in an extruder 15 connected to a gear pump 19, and then carbon dioxide is injected from a gas supply device 18 into the molten resin to manufacture a foamable resin composition. The foamable resin composition was kneaded in an extruder 16 while being cooled to 170°C and supplied to a first manifold 4 of the multi-manifold mold 1.

As the non-foaming resin composition, 100 parts by weight of polypropylene (trade name: Novatec EA9, manufactured by Japan Polypropylene Corporation) and 20 parts by weight of exfoliated graphite were melt-kneaded at 200°C in an extruder 17 connected to a gear pump 20 to manufacture a second resin composition. As the exfoliated graphite, graphite (high purity graphite, trade name: SNO-5, a maximum size in the plane direction of the layer planes of graphene layers of 5 µm, manufactured by SEC Carbon, Ltd.) was used. The second resin composition was supplied to a second manifold 5 of the multi-manifold mold 1.

The foamable resin composition extruded from the first manifold 4 is foamed by pressure releasing the resin composition under high pressure with carbon dioxide at a stroke by expanding the size of a resin passage 4A from the thickness direction dimension H0 to the thickness direction dimension HI, as shown in Figure 1 (b). Then, the resin composition foamed at the position of a merging and laminating part 3 was merged with the non-foamed resin composition extruded from a second manifold 5 before the surfaces are hardened to thereby obtain a resin laminate. The resin laminate was taken-up by a take-up machine 21.

The resulting resin laminate had a total thickness of 7 mm, a foamed resin layer 11A thickness of 5 mm (an expansion ratio of 5 times, * expansion ratio = specific gravity before foaming/specific gravity after foaming), and a non-foamed resin layer 12A thickness (each of the back and front) of 1 mm.

### Reference Signs List

- 1: Multi-manifold mold
- 2: Multi-manifold part
- 3: Merging and laminating part
- 3A: Internal space
- 3a: Extrusion opening
- 4: First manifold
- 4A: Resin passage
- 4a: End
- 5: Second manifold
- 5A: Resin passage
- 5a: End
- 7, 7A, 7B: Temperature control piping
- 8: Insulating member
- 10: Resin laminate
- 11: Foamable resin composition
- 11A: Foamed resin layer
- 12: Second resin composition
- 12A: Non-foamed resin layer
- 13: Sizing die
- 14: Resin laminate manufacturing device
- 15: Extruder
- 16: Extruder
- 17: Extruder
- 18: Gas supply device
- 19: Gear pump
- 20: Gear pump
- 21: Take-up machine

## Claims

1. A method for manufacturing a resin laminate in which a foamed resin layer and a non-foamed resin layer are laminated and which has at least one foamed resin layer, the method comprising the steps of:
supplying a foamable resin composition to a first manifold and supplying a second resin composition for constituting a non-foamed resin layer to a second manifold in a multi-manifold mold, the multi-manifold mold comprising the first manifold for supplying a molten foamable resin composition in a non-foamed state, the second manifold for forming the non-foamed resin layer, and a merging and laminating part connected to the downstream of a manifold part having the first and the second manifold;
extruding in the multi-manifold mold, the foamable resin composition from the first manifold to the merging and laminating part in the mold and releasing pressure to thereby foam the foamable resin composition to form the foamed resin layer;
extruding the non-foamed resin layer from the second manifold and, in an internal space of the merging and laminating part in the multi-manifold mold, merging and laminating the extruded non-foamed resin layer and the foamed resin layer simultaneously with, during or after the foaming of the foamable resin by the pressure release.

2. The method for manufacturing a resin laminate according to claim 1, wherein the foamed resin layer after foaming is cooled so that the foamed resin layer maintains a foamed state before reaching the merging and laminating part.

3. The method for manufacturing a resin laminate according to claim 2, wherein, during the cooling, the foamed resin layer is cooled to a temperature lower than the melting point of a resin constituting the foamed resin layer.

4. The method for manufacturing a resin laminate according to any one of claims 1 to 3, wherein a plurality of non-foamed resin layers are laminated to the foamed resin layer using a plurality of the second manifolds.

5. The method for manufacturing a resin laminate according to any one of claims 1 to 4, wherein the non-foamed resin layers are laminated to both surfaces of the foamed resin layer.

6. The method for manufacturing a resin laminate according to any one of claims 1 to 5, further comprising a step of supplying the resin laminate obtained by merging and laminating the non-foamed resin layer and the foamed resin layer to a sizing die to thereby shape the surface of the resin laminate.

7. The method for manufacturing a resin laminate according to any one of claims 1 to 6, wherein the foamable resin composition is a resin composition containing a thermoplastic resin and a foam nucleating agent, wherein the foam nucleating agent is contained in an amount of 0.1 to 10 parts by weight based on 100 parts by weight of the thermoplastic resin.

8. The method for manufacturing a resin laminate according to any one of claims 1 to 7, wherein the foamable resin composition is a resin composition containing a thermoplastic resin and a crosslinking component, wherein the crosslinking component is contained in an amount of 0.5 to 40 parts by weight based on 100 parts by weight of the thermoplastic resin.

9. A device for manufacturing a resin laminate comprising a multi-manifold part arranged on the upstream side and a merging and laminating part connectedly arranged on the downstream side of the multi-manifold part, wherein
the multi-manifold part has a first manifold for supplying a foamable resin composition and a second manifold for supplying a second resin composition for forming a non-foamed resin layer, and
the merging and laminating part has an internal space in which the first manifold and the second manifold merge and in which a foamed resin layer is laminated to the non-foamed resin layer.

10. The device for manufacturing a resin laminate according to claim 9, further comprising a step of supplying the resin laminate to a sizing die connectedly arranged on the downstream side of the merging and laminating part to thereby smooth the surface of the resin laminate and efficiently cool the resin laminate.

11. The device for manufacturing a resin laminate according to claim 9 or 10, wherein, in the merging and laminating part, the dimension of the resin laminate in the internal space in the thickness direction is larger than the total of the dimension of the first manifold in the thickness direction and the dimension of the second manifold in the thickness direction.

12. The device for manufacturing a resin laminate according to claim 9 or 10, wherein the dimension of the internal space of the merging and laminating part along the thickness direction of the resin laminate is larger than the dimension of the resin laminate along the thickness direction at the end of the first manifold on the side toward the merging and laminating part.

13. The device for manufacturing a resin laminate according to claim 12, wherein the device has a portion in which the dimension of the internal space of the merging and laminating part along the thickness direction of the resin laminate is gradually enlarged from the end of the merging and laminating part on the side connected to the first manifold toward the downstream side.

14. The device for manufacturing a resin laminate according to claim 13, wherein a passage wall in the portion in which the dimension of the internal space of the merging and laminating part along the thickness direction is gradually enlarged from the end of the merging and laminating part on the side connected to the first manifold toward the downstream side is surface-treated to increase the linear velocity of the foamable resin in contact with the passage wall.

15. The device for manufacturing a resin laminate according to any one of claims 9 to 14, wherein a cooling device for cooling to maintain a foamed state of the foamed resin layer is provided in the merging and laminating part.
